# FASCICULE DE BREVET EUROPEEN

(11) **EP 3 066 648 B1**
(45) Date de publication et mention de la délivrance du brevet: **27.01.2021**
(21) Numéro de dépôt: 14761854.0
(22) Date de dépôt: 09.09.2014
(51) Int. Cl.: G07C 9/00

(54) **AUTHENTIFICATION D'UN UTILISATEUR MUNI D'UN APPAREIL MOBILE AUPRÈS D'UN VÉHICULE**
AUTHENTIFIZIERUNG EINES BENUTZERS MIT EINER MOBILEN VORRICHTUNG DURCH EIN FAHRZEUG
AUTHENTICATION OF A USER PROVIDED WITH A MOBILE DEVICE BY A VEHICLE

(30) Priorité: 09.09.2013 FR 1302101
(43) Date de publication de la demande: 14.09.2016
(73) Titulaire: Valeo Comfort and Driving Assistance, 94046 Créteil Cedex (FR)
(72) Inventeur: GEHIN, Frédéric, F-94046 Créteil Cedex (FR); PETEL, Laurent, F-94046 Créteil Cedex (FR); GIBOURDEL, Hélène, F-94046 Créteil Cedex (FR); KUOCH, Siav Kuong, F-94046 Créteil Cedex (FR)
(74) Mandataire: Delplanque, Arnaud
(86) Numéro de dépôt international: PCT/EP2014/069194
(87) Numéro de publication internationale: WO 2015/032979

(56) Documents cités:
- WO-A1-2006/098690
- WO-A1-2009/152628
- WO-A2-2008/070886
- US-A1- 2004 066 092
- US-A1- 2004 201 277
- US-A1- 2005 210 283

## Description

### DOMAINE TECHNIQUE DE L'INVENTION

Le domaine technique de l'invention est celui des véhicules automobiles et plus particulièrement de l'accès de types mains libres l'accès à un véhicule automobile sans clef mécanique. L'invention se rapporte ainsi à un procédé de pré-authentification d'un utilisateur auprès d'un véhicule, ledit utilisateur étant muni d'un appareil mobile.

On entendra par appareil mobile dans le cadre de la présente demande tout dispositif permettant à une personne d'accéder à des données et informations peu importe où cette personne se trouve. Les termes appareils mobiles englobent les téléphones mobiles, plus particulièrement du type Smartphones, les ordinateurs portables, les tablettes, les assistants numériques personnels (PDAs) etc...
On entendra par ouvrant de véhicule dans le cadre de la présente demande toute ouverture du véhicule verrouillée nécessitant l'action d'un utilisateur pour son déverrouillage : portière, coffre, etc.

### ETAT DE LA TECHNIQUE ANTERIEURE

L'accès à un véhicule automobile en mains libres se fait généralement au moyen d'un Identifiant Client (« Customer Identifier » en anglais, CID dans le reste de la demande) non destinée à s'insérer dans la serrure de verrouillage de l'ouvrant du véhicule auquel un utilisateur souhaite accéder. Ce CID se présente sous la forme d'un badge ou d'une carte que l'utilisateur garde avec lui, en poche ou dans son sac par exemple, et lorsque l'utilisateur actionne la poignée de l'ouvrant, le déverrouillage de la serrure s'effectue. L'actionnement de la poignée de l'ouvrant par l'utilisateur est un mouvement initié par le début de tiré de la poignée et terminée par la fin du tiré de la poignée par l'utilisateur. A la fin du mouvement d'actionnement de la poignée, i.e. lorsqu'elle a été entièrement tirée, si la serrure n'a pas été déverrouillée, elle reste verrouillée et l'ouvrant sur lequel est disposée la poignée ne pourra pas être ouvert par l'utilisateur. On parle communément d' « effet de mur ». Pour le déverrouillage de la serrure, des informations d'authentification sont échangées entre le CID et un calculateur du véhicule, le calculateur commandant le déverrouillage de la serrure. L'effet de mur intervient lorsque l'utilisateur a commencé à tirer la poignée et que les échanges d'information nécessaires au déverrouillage de la serrure ne sont pas terminés lorsque l'utilisateur arrive en position de fin de tiré de la poignée. Pour éviter cet effet de mur, il est nécessaire que l'échange d'informations soit terminé avant la fin du tiré de la poignée. Il ne lui est plus possible d'ouvrir l'ouvrant du véhicule et d'y accéder sans relâcher la poignée et recommencer l'opération. Ainsi, une fois que la poignée est trop tirée, même si la serrure se déverrouille il n'est plus possible d'ouvrir l'ouvrant. En effet, le déverrouillage de la serrure consiste à solidariser mécaniquement un cliquet avec un levier d'ouverture afin que ce dernier entraine le cliquet lors de son mouvement. Si cette action de solidarisation a lieu une fois que la poignée est trop tirée, le mouvement du levier d'ouverture n'aura plus d'effet sur le cliquet

En moyenne, il est estimé que le temps nécessaire à un utilisateur pour accomplir le mouvement d'actionnement de la poignée de l'ouvrant est d'environ 90ms auxquels il faut ajouter 30ms de latence de la serrure pour bouger mécaniquement. Ainsi la durée moyenne observée entre le début du tiré de poignée et l'ouverture de l'ouvrant est de 120ms. Afin d'éviter l'effet de mur, il faut envoyer l'ordre de déverrouillage à la serrure dans les environ 90ms après le début de tirée de la poignée.
Classiquement, les étapes à effectuer, dans le temps imparti pour éviter l'effet de mur, en vue d'envoyer l'ordre de déverrouillage sont les suivantes :
- détection par le véhicule de l'intention de l'utilisateur d'accéder au véhicule par l'ouvrant verrouillé. Cette détection se fait au moyen de la poignée et de moyens disposés sur la poignée et reliés à un calculateur du véhicule ; ces moyens sont par exemple soit un interrupteur mécanique qui détecte le début de tiré de poignée, soit un capteur d'approche qui détecte le quasi-contact de la main avec la poignée ;
- réveil du calculateur du véhicule, réveil qui consiste en passage d'un mode très basse consommation électrique ne permettant que peu de calculs simples à un mode de fonctionnement plus performants mais plus consommateurs d'énergie ; le réveil nécessite la reprise de données en mémoire du µC ainsi que l'initialisation de certaines fonctions ;

- envoi, par le calculateur du véhicule, d'un challenge d'authentification au CID de l'utilisateur ;
- le CID de l'utilisateur calcule une réponse au challenge, en fonction, entre autres, d'une clef d'identification apprise et stockée ;
- la réponse au challenge est envoyée du CID au véhicule ;
- comparaison entre la réponse envoyée par le CID et la réponse attendue ;
- commander le déverrouillage de la serrure lorsque les réponses sont identiques. Une fois l'ordre de déverrouillage envoyé, il faut que les pièces mécaniques de la serrure se déplacent (durée d'environ 30ms).

Nous nous intéressons au cas d'un CID intégrant une interface Bluetooth® Basse Consommation (Bluetooth® Low Energy en anglais, BLE dans la suite de la demande), le véhicule auquel il va se coupler comportant également une interface BLE. Ainsi, un canal de communication bidirectionnel est établi entre le véhicule et le CID. Généralement le CID intègre un récepteur Basse Fréquence (BF dans la suite de la demande) et la voiture intègre une antenne BF, ainsi un canal unidirectionnel BF peut s'établir de la voiture au CID. Il n'y a pas d'établissement d'un canal bidirectionnel BF car pour établir un canal bidirectionnel en BF, il est nécessaire d'intégrer à la fois un composant émetteur BF et un composant récepteur BF à la fois sur le CID et sur le véhicule, ce qui engendre des coûts élevés.

Lorsque l'utilisateur touche la poignée, le calculateur du véhicule est réveillé, ce calculateur est dit « calculateur d'accès mains libres ». Le challenge d'authentification est envoyé au travers du canal BF du véhicule vers le CID. Le récepteur BF du CID est quant à lui en écoute permanente et donc l'échange d'informations démarre instantanément. Le récepteur BF reçoit le challenge d'authentification envoyé par le calculateur d'accès mains libres et le CID est réveillé. Le CID effectue alors le calcul nécessaire à la réponse au challenge et renvoie ce résultat au travers du canal BLE. L'étape de réveil se fait au moyen du canal BF car une écoute permanente BF a une consommation énergétique moins élevée qu'une écoute permanente BLE, au détriment de la rapidité. La réponse au challenge est quant à elle renvoyée au moyen du canal BLE pour la raison explicitée au-dessus et aussi car une communication BLE est plus rapide que BF.

Un véhicule automobile auquel un utilisateur tente d'accéder en ouvrant une portière est généralement moteur arrêté. Dans ce cas-là, la seule source d'énergie disponible pour le calculateur du véhicule et les composants de l'émetteur BF et de l'interface BLE est la batterie du véhicule, il est donc nécessaire de limiter la consommation d'énergie du véhicule de façon à ne pas vider la batterie du véhicule lors de l'authentification pour l'accès au véhicule. La fonction communication qui utilise le canal BLE est ponctuelle et donc peut être utilisée, malgré sa consommation d'énergie élevée.

Un CID est généralement alimenté sur une pile bouton que l'utilisateur ne souhaite pas changer trop souvent ; il est donc nécessaire de limiter la consommation d'énergie du CID de façon à ne pas vider la pile du CID lors de l'écoute permanente d'un signal de réveil. La fonction communication qui utilise le canal BLE est ponctuelle et donc peut être utilisée, malgré sa consommation d'énergie élevée.

La tendance actuelle va à l'intégration du maximum de données d'authentification d'un utilisateur sur un même dispositif, tel qu'un appareil mobile du type smartphone. Lorsque le CID est intégré à un smartphone, la configuration est différente. En effet, les normes en téléphonie mobile n'intègrent pas de canal BF sur un téléphone mobile. L'accès au véhicule au moyen du smartphone peut se faire au moyen du canal BLE. Dans la norme BLE, chaque élément, à chaque instant se trouve dans un certain état, parmi lesquels :
- état de veille : l'élément de fait rien, ni émission, ni réception ;
- état notification : l'élément émet en permanence des trames de données à l'intention d'autres éléments qui peuvent écouter. Il indique qu'il est disponible, son identification et les services qu'il propose ;
- état balayage : l'élément cherche dans son environnement d'autres éléments proposant un/des services pour échanger avec eux
- état initiation : un premier élément qui est en balayage découvre un élément avec un service souhaité et demande à s'y connecter
- état connecté : 2 éléments sont connectés et peuvent donc échanger des données

Dans le cas d'utilisation d'un smartphone pour déverrouiller un ouvrant d'un véhicule, le véhicule et le smartphone sont dans l'état notification en permanence. Quand un utilisateur touche une poignée du véhicule, le véhicule passe dans l'état balayage/écoute et récupère la première trame de données de notification du smartphone qu'il entend. Un smartphone émet une trame de données de notification typiquement environ toutes les 100ms (norme imposée par les constructeurs de smartphone). A partir du moment où le véhicule a récupéré la trame de notification du smartphone, le véhicule envoie une demande de connexion au smartphone dans laquelle il demande la liste des services proposés par le smartphone afin de vérifier la présence d'un service du type "accès véhicule". La durée de cette opération est d'environ 20ms. Le smartphone étant dans l'état de notification, il ne peut pas refuser la connexion et le canal de communication BLE s'établit entre le véhicule et le smartphone. Alors, le véhicule envoie le challenge au smartphone (durée de cette opération : environ 20ms) et le véhicule renvoie la réponse au challenge (durée de cette opération : environ 20ms). Au final pour établir le déverrouillage de la serrure au moyen d'un smartphone en utilisant une connexion BLE, il faut actuellement en moyenne 160ms, ce qui ne permet pas de s'affranchir de l'effet de mur mentionné plus haut. La réduction de la période de notification du smartphone de 100 ms à 30 ms pour passer en dessous de la barre temporelle de l'effet de mur n'est pas envisageable car cela engendrerait des consommations d'énergie bien trop importantes pour la batterie du smartphone.

US 2004/201277 A1 divulgue un procédé de contrôle d'accès pour véhicules utilisant le protocole Bluetooth entre un appareil mobile (téléphone portable de l'utilisateur) et un véhicule dans lequel le processus d'appairage et d'authentification est réalisé lors de l'approche de l'appareil mobile et ce, avant que le déverrouillage ne doive être exécuté afin de limiter le temps d'exécution.

### EXPOSE DE L'INVENTION

L'invention vise à remédier à tout ou partie des inconvénients de l'état de la technique identifiés ci-dessus, et notamment à proposer une méthode permettant de s'affranchir de l'effet de mur préjudiciable à l'utilisateur tout en limitant la consommation d'énergie du smartphone.

Dans ce dessein, un aspect de l'invention se rapporte à un procédé de pré authentification d'un utilisateur auprès d'un véhicule en vue d'opérer l'accès de l'utilisateur au véhicule lors de l'actionnement d'une poignée disposée sur un ouvrant dudit véhicule, ledit utilisateur étant muni d'un appareil mobile, ledit véhicule et ledit appareil mobile comportant chacun une interface de communication sans fil selon le protocole Bluetooth® Low Energy, chacune desdites interfaces pouvant adopter un état au moins parmi les états suivants: « stanby » , « notification », « balayage », « initiation », « connecté » ; chacune desdites interfaces étant initialement dans l'état « notification » dans lequel chacune desdites interfaces émet selon une période d'émission de base au moins un ensemble de données comportant entre autres des données d'identité et des informations de disponibilité d'un service d'accès au véhicule; ledit procédé comportant :
- une première étape dans laquelle l'une desdites interface passe de l'état « notification » à l'état « balayage » dans lequel ladite interface recherche dans son environnement la présence d'une interface pendant une durée au moins égale à la période d'émission de base de l'autre interface, ladite autre interface émettant un ensemble de données comportant les informations de disponibilité dudit service d'accès au véhicule, ledit passage de l'état « notification » à l'état « balayage » se faisant selon une période prédéterminé ;
- une deuxième étape dans laquelle, si l'interface dans l'état « balayage » identifie la présence de l'autre interface dans l'état « notification », l'interface dans l'état « balayage » passe dans un état « initiation » dans lequel elle demande à l'interface identifiée l'établissement d'une connexion;
- une troisième étape dans laquelle les interfaces du véhicule et de l'appareil mobile passent à l'état « connecté » dans lequel elles peuvent échanger des données;
- une quatrième étape dans laquelle le véhicule envoie au moyen de l'interface et à destination de l'interface de l'appareil mobile une demande d'authentification ;
- une cinquième étape dans laquelle l'appareil mobile envoie au moyen de l'interface et à destination de l'interface du véhicule une trame de données contenant sa réponse à la demande d'authentification, ladite trame de données comportant également des données d'identité de l'appareil mobile;
- une sixième étape dans laquelle le véhicule vérifie la cohérence de la réponse d'authentification envoyée par l'appareil mobile;
- une septième étape dans laquelle, le véhicule, stocke les données d'identité de l'appareil mobile, si la réponse d'authentification envoyée par l'appareil mobile est cohérente ;
- une huitième étape dans laquelle les interfaces du véhicule et de l'appareil mobile repassent à l'état « notification » ;
- une neuvième étape dans laquelle lorsque la poignée de l'ouvrant du véhicule est actionnée, l'interface du véhicule passe de l'état « notification » à l'état « balayage » ;
- une dixième étape dans laquelle, l'interface dans l'état « balayage » valide la présence de l'interface de l'appareil mobile dans l'état « notification » par réception d'une trame de données émise par l'interface de l'appareil mobile comportant entre autres les données d'identité stockées, et autorise l'accès au véhicule par déverrouillage dudit ouvrant.

Le procédé d'authentification selon l'invention permet notamment de s'affranchir de l'effet de mur lors d'une tentative de déverrouillage d'un ouvrant du véhicule par l'utilisateur. En effet, la réalisation notamment de la septième étape permet de pré authentifier l'interface de l'appareil mobile auprès du véhicule grâce au stockage de la première donnée d'identité de l'appareil mobile dans la mémoire du véhicule. Le procédé selon l'invention permet d'utiliser les capacités longue portée des première et deuxième interfaces de communication sans fil afin de s'affranchir de l'effet de mur. En effet, dans le cas d'une communication utilisant le protocole Bluetooth® Low Energy, la portée moyenne est de 30 à 50m voire 150m en champ libre. Ainsi, étant donné qu'une des deux interfaces est en état d'écoute, dans la première étape, afin de détecter l'autre interface, la première trame de données générée par une des deux interfaces est reçue par l'autre interface dès que les premières et deuxièmes interfaces sont à portée l'une de l'autre i.e. avant que l'utilisateur ne soit au contact de la voiture. On réalise ainsi des étapes de pré-authentification avant que l'utilisateur n'arrive au véhicule et ne débute l'action de tiré de poignée d'un ouvrant du véhicule. La consommation d'énergie du véhicule ou de l'appareil mobile est limitée à la seule réalisation de la première étape par la première interface, i.e. la génération de la première trame de données qui est envoyée au travers de la première interface. Dans le cas d'un protocole de communication BLE, la première interface est dite en « notification » et elle émet périodiquement cette première trame de données qui comporte des informations de la première interface sur le service disponible afin de prévenir d'éventuelles interfaces autour d'elle de sa présence et de sa disponibilité. Le véhicule doit disposer du service pour l'authentification d'un utilisateur en vue d'un accès automobile. Outre les caractéristiques principales qui viennent d'être mentionnées dans le paragraphe précédent, le procédé selon l'invention peut présenter une ou plusieurs caractéristiques complémentaires parmi les suivantes, considérées individuellement ou selon les combinaisons techniquement possibles :
- les trames de données émise, par l'interface de l'appareil mobile, dans l'état « notification » ou lors de la réponse à la demande d'authentification, comportent également une information sur la position de l'appareil mobile ;
- dans la sixième étape, à partir de l'information sur la position de l'appareil mobile, la distance entre le véhicule et l'appareil mobile est obtenue et est comparée à une valeur de distance seuil prédéterminée.
- si la distance est inférieure ou égale à la distance seuil on passe à la septième étape, et en ce que si la distance est supérieure à la distance seuil on retourne à la première étape. Ainsi, notamment, les opérations de pré authentification que si l'appareil mobile se situe à une distance limitée du véhicule, par exemple une dizaine de mètres.
- dans la dixième étape, à partir de l'information sur la position de l'appareil mobile, la distance entre le véhicule et l'appareil mobile est obtenue et est comparée à une de distance de déverrouillage prédéterminée.
- si la distance entre le véhicule et l'appareil mobile est supérieure à la distance de déverrouillage prédéterminée, le déverrouillage de l'ouvrant est inhibée. Ainsi, avant de valider le déverrouillage de l'ouvrant associé à la poignée tirée, on vérifie que le t'appareil mobile est bien à proximité immédiate du véhicule (typiquement moins d'un mètre).
- la distance entre le véhicule et l'appareil mobile est évaluée à partir d'un côté du véhicule pour différencier la présence de l'appareil mobile sur la gauche ou sur la droite du véhicule, le déverrouillage dans la dixième étape n'étant autorisé que si l'appareil mobile est localisé du côté de l'actionnement de la poignée.
- la période d'émission de base de l'interface de l'appareil mobile est d'environ 100ms.
- la période prédéterminé de passage de l'état « notification » à l'état « balayage » de l'une desdites interface est de l'ordre de quelques secondes, préférentiellement 10 secondes. Ainsi, on limite la consommation d'énergie au niveau de l'appareil mobile en imposant une période d'émission du téléphone mobile inférieure à la période d'écoute (état balayage) du véhicule automobile. Ainsi, si l'interface du téléphone mobile génère la trame de données toutes les 100ms (en fonction des capacités de la batterie de l'appareil mobile et au plus bas toutes les 20ms du fait des caractéristiques constructeurs qui limitent dans le cas d'un protocole BLE cette première période à 20ms), la deuxième interface est dans l'état d'écoute pendant par exemple 100ms toutes les 10secondes.
- les données d'identité de l'appareil mobile stockées dans la septième étape sont valides pendant une durée de validité prédéterminée. L'appareil mobile est ainsi pré authentifié auprès du véhicule, par le stockage des données d'identité dans la mémoire du véhicule, pendant un laps de temps prédéterminé, par exemple 30s qui permet à l'utilisateur de terminer son approche physique du véhicule pour actionner la poignée.
- dans la huitième étape, l'interface de l'appareil mobile passe dans l'état « notification » avec une période d'émission modifiée inférieure à la période d'émission en mode « notification » de base, pendant la durée de validité.
- la période d'émission modifiée est fixée à la moitié de la période d'émission de base.
- dans la huitième étape les trames de données émises, par l'interface de l'appareil mobile, dans l'état « notification », comportent également code évolutif fonction du temps relatif ou absolu, ou fonction d'une incrémentation. Ainsi, par exemple, une personne malintentionnée ayant réussi à intercepter des données d'identification de l'appareil mobile ne pourra pas utiliser ultérieurement les données interceptées pour ouvrir le véhicule, car lesdites données interceptées contiennent une information représentative de l'instant auquel les données auront été interceptées. Les informations temporelles ou incrémentales seront donc obsolètes lors d'une utilisation ultérieure des données interceptées.

### BREVE DESCRIPTION DES FIGURES

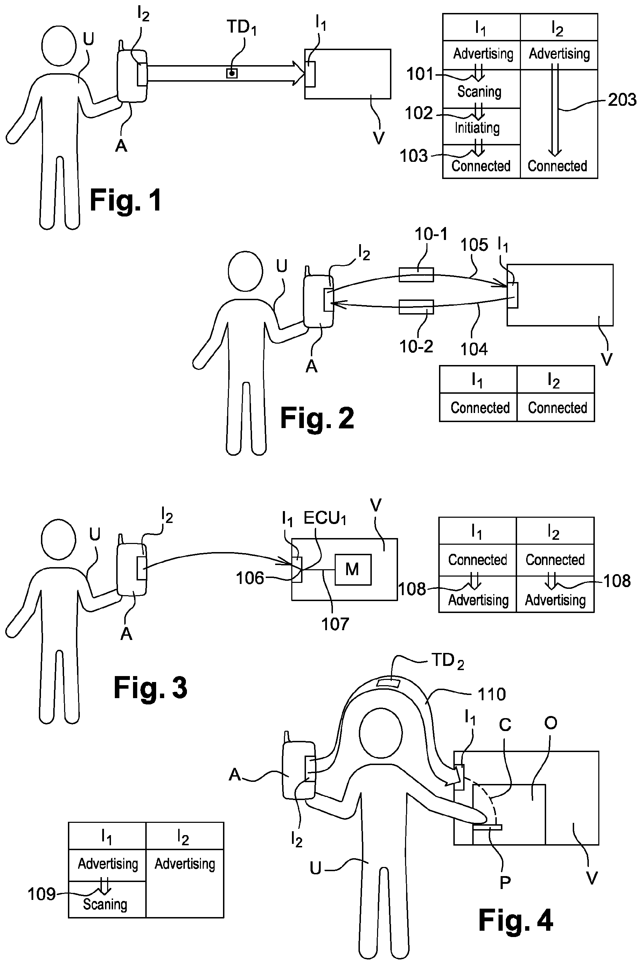

D'autres caractéristiques et avantages de l'invention ressortiront à la lecture de la description qui suit, en référence aux figures annexées, qui illustrent :
A la figure 1, une représentation schématique du déroulement de premières étapes d'un exemple de mise en œuvre du procédé selon l'invention ;
A la figure 2, une représentation schématique du déroulement d'étapes suivantes intervenant suite aux premières étapes représentées à la figure 1 pour la mise en œuvre du même exemple;
A la figure 3, une représentation schématique du déroulement d'étapes suivantes intervenant suite aux premières étapes représentées à la figure 2 pour la mise en œuvre du même exemple ;
A la figure 4, une représentation schématique du déroulement d'étapes suivantes intervenant suite aux premières étapes représentées à la figure 3 pour la mise en œuvre du même exemple.

Pour plus de clarté, les éléments identiques ou similaires sont repérés par des signes de référence identiques sur l'ensemble des figures.

### DESCRIPTION DETAILLEE D'UN MODE DE REALISATION

Les figures 1à 4 illustrent différentes étapes d'un procédé de pré-authentification d'un utilisateur auprès d'un véhicule selon un premier mode de réalisation de l'invention.
La figure 1 illustre une première étape 101, une deuxième étape 102 et une troisième étape 103 d'un exemple de mise en œuvre du procédé selon l'invention. Sur cette figure, on a représenté un utilisateur U muni d'un appareil mobile A et un véhicule V. Le véhicule V comporte une première interface de communication sans fil I1, et l'appareil mobile A comporte une deuxième interface de communication sans fil I2. La première interface I1 et la deuxième interface I2 sont aptes à communiquer selon le protocole BLE.

Selon le mode de réalisation décrit, la première interface I1 et la deuxième interface I2 sont dans l'état « notification » ; ainsi la première interface I1 et la deuxième interface I2 émettent au moins une trame de données comportant entre autres des données d'identité et des informations de disponibilité d'un service spécifique d'accès au véhicule. Les interfaces émettent ainsi périodiquement des informations afin de prévenir les équipements BLE aux alentours de leur présence, de leurs caractéristiques et de leur disponibilité pour l'établissement d'un canal de communication BLE.
- L'émission des trames de données est effectuée selon une période d'émission de base : la première interface I1 émet selon une première période de base d'émission et la deuxième interface I2 émet selon une deuxième période de base d'émission, typiquement de l'ordre de cent millisecondes.
- La première étape 101 de l'exemple décrit consiste à faire passer l'interface I1 du véhicule V de l'état notification à l'état balayage. On prévoit avantageusement un tel changement d'état toutes les quelques secondes, typiquement toutes les dix secondes. La première interface est alors apte à rechercher dans son environnement, c'est-à-dire dans sa zone de couverture de communication selon le protocole BLE, la présence d'une interface de communication émettant selon le protocole BLE. L'état balayage de l'interface I1 est adopté pendant une durée au moins égale à la période d'émission de base de l'interface I2 de l'appareil mobile A, et est opérée selon une période prédéterminée. On a ainsi la certitude que l'interface I2 sera entendue par l'interface I1 si l'interface I2 est dans la zone de couverture de l'interface I1. L'interface I2 de l'appareil mobile A émet une première trame de données TD1 comportant les informations de disponibilité dudit service d'accès au véhicule V.
Si l'interface I1 du véhicule V dans l'état balayage identifie la présence de l'interface I2 de l'appareil mobile A dans l'état notification, alors, dans une deuxième étape 102, l'interface I1 du véhicule V passe de l'état balayage à l'état initiation dans lequel elle demande à l'interface I2 identifiée l'établissement d'une connexion encryptée.

On passe alors à une troisième étape 103 dans laquelle les interfaces I1 du véhicule V et l'interface I2 de l'appareil mobile A passent à l'état « connecté » dans lequel elles peuvent échanger des données encryptées.

Dans d'autres exemples de mise en œuvre du procédé selon l'invention, c'est l'interface I2 de l'appareil mobile qui passe de l'état notification à l'état balayage, le rôle des interfaces I1 et I2 étant inversé jusqu'à l'établissement de la connexion entre les deux interfaces lors de la troisième étape 103. L'exemple décrit sur la figure 1 apparait plus avantageux afin de limiter au maximum la consommation d'énergie par le téléphone mobile.

La figure 2 illustre une quatrième étape 104 et une cinquième étape 105 d'un exemple de mise en œuvre du procédé selon l'invention. Sur cette figure, on a représenté le fait que, dans la quatrième étape 104, le véhicule V envoie au moyen de l'interface I1 à destination de l'interface I2 de l'appareil mobile A une demande d'authentification 10-2. Dans la cinquième étape 105, l'appareil mobile A envoie alors au moyen de l'interface I2 et à destination de l'interface I1 du véhicule V une trame de données 10-1 contenant sa réponse à la demande d'authentification, ladite trame de données 10-1 comportant également des données d'identité de l'appareil mobile A.

Dans cette quatrième étape 104 et cinquième étape 105, les deux interfaces I1 et I2 demeurent dans un état « connecté ».
La figure 3 illustre une sixième étape 106, une septième étape 107 et une huitième étape 108 d'un exemple de mise en œuvre du procédé selon l'invention. Sur cette figure, on a représenté le fait que, dans la sixième étape 106, le véhicule V vérifie, au moyen d'une unité ECU1 de commande électronique du véhicule V, la cohérence de la réponse d'authentification envoyée par l'appareil mobile A.

Avantageusement, la trame de données 10-1, ou des trames suivantes envoyées immédiatement après la trame de données 10-1 dans la cinquième étape (105), comporte une information sur la position de l'appareil mobile A. Dans un tel cas, l'authentification ne sera validée que si l'appareil mobile A se trouve à une distance du véhicule V inférieure à une distance seuil préalablement déterminée. Si la distance entre le véhicule V et l'appareil mobile A est supérieure à la distance seuil, on reprend le procédé selon l'invention à la première étape 101.

Si la réponse d'authentification envoyée par l'appareil mobile A est cohérente, et donc validée, alors, dans une septième étape 107, le véhicule V stocke les données d'identité de l'appareil mobile A dans une mémoire M contrôlée par l'unité ECU1 de commande électronique du véhicule V. Avantageusement, les données d'identité ne sont mémorisées dans la mémoire M que pendant une durée de validité limitée, de l'ordre de quelques dizaines de secondes, typiquement une trentaine de secondes, pour laisser le temps à l'utilisateur U d'accéder effectivement au véhicule V. Au-delà de cette durée de validité, les données d'identité sont effacées, la présence de l'utilisateur U à proximité du véhicule V ne correspondant manifestement pas à une volonté d'ouvrir le véhicule V. On procède alors à une huitième étape 108 dans laquelle les interfaces I1 et I2 du véhicule V et de l'appareil mobile A repassent à l'état « notification ». Dans ce nouvel état "notification", on prévoit avantageusement une nouvelle période d'émission de l'interface I2 de l'appareil mobile A inférieure à la deuxième période de base d'émission de base utilisée lors de la première étape 101 qui était de l'ordre de cent millisecondes. La nouvelle période d'émission de l'interface I2 est avantageusement de l'ordre de cinquante millisecondes. Ainsi, l'appareil mobile A pourra être repéré plus rapidement par le véhicule V. L'énergie dépensée par l'appareil mobile A est alors plus importante, mais ceci ne constitue pas un réel handicap car la nouvelle période d'émission de base n'est maintenue que pendant la neuvième étape 109. Les données transmises depuis l'interface I2 de l'appareil mobile vers l'interface I1 du véhicule V comportent avantageusement une clé temporelle donnant une information sur le moment de cette transmission.

La figure 4 illustre une neuvième étape 109 et une dixième étape 110 d'un exemple de mise en œuvre du procédé selon l'invention. Sur cette figure, on a représenté le fait que l'utilisateur U exerce, dans la neuvième étape 109, une action sur une poignée P d'un ouvrant O, ici une portière, du véhicule V, pendant la durée de validité pendant laquelle les données d'identification de l'appareil mobile A sont mémorisées dans la mémoire M. La poignée P de l'ouvrant O est muni de capteurs C permettant de transférer à la première interface I1 l'action de l'utilisateur U sur la poignée. Lorsque le début du tiré de poignée est détecté, la première interface I1 du véhicule V passe alors dans un état d'écoute ("balayage") dans cette étape 109, c'est-à-dire qu'elle est configurée pour recevoir une trame de données. Comme la deuxième interface I2 de l'appareil mobile était repassée en état d'envoi ("notification") lors de la huitième étape 108, elle génère, dans une dixième étape 110, une deuxième trame de données TD2. La deuxième trame de données TD2 est reçue par l'interface I2 du véhicule V. La deuxième trame de données TD2 comporte notamment des informations d'identité de l'appareil mobile A. L'unité de commande électronique du véhicule ECU1 effectue une comparaison entre les informations d'identité reçues et les données d'identité préalablement mémorisées dans la mémoire M au cours de la septième étape 107. Si les deux éléments - les informations d'identité reçues et les données d'identité mémorisées - correspondent, l'unité de contrôle électronique transmet une commande de déverrouillage à la serrure de l'ouvrant O du véhicule V qui se déverrouille.

Avantageusement, la trame de données TD2, ou des trames suivantes envoyées immédiatement après la trame de données 10-2 dans la dixième étape 110, comporte une information sur la position de l'appareil mobile A. Dans un tel cas, la commande de déverrouillage ne sera transmise que si l'appareil mobile A se trouve à une distance du véhicule V inférieure à une distance de déverrouillage préalablement déterminée. Si la distance entre le véhicule V et l'appareil mobile A est supérieure à la distance de déverrouillage, typiquement moins d'un mètre, la commande de déverrouillage n'est pas transmise.

Dans un mode de réalisation avantageux, il est prévu que le véhicule V, à partir de l'étape 107, c'est-à-dire lorsque le véhicule V et l'appareil mobile sont à l'état « connecté » et que l'appeil mobile a correctement était authentifié, signifie à l'appareil mobile A d'introduire dans ses futurs trames de données TD2 en plus du message prévu, un code évolutif. Ainsi, entre deux trames TD2, le message émis sera différent du fait que le code aura évolué.

Cet évolution permet d'éviter qu'une personne malintentionnée ayant réussi à intercepter une trame de données TD2, émise par l'interface I2 en mode «notification» à partir de la huitième étape 108 n'utilise ultérieurement les données interceptées pour ouvrir le véhicule, car lesdites données interceptées contiennent une information obsolète.

Le code évolutif peut-être fonction d'horloge absolue ou relatif à partir de l'étape 108. Dans une alternative, le code évolutif sera fonction d'une incrémentation entre chaque trame successive définie à partir de l'étape 108.

Dans un mode de réalisation alternative, l'appareil mobile émet à partir de l'étape 108 des trames « notification », mais le code évolutif calculé n'est transmis que lors de l'étape 109 au cours de laquelle le véhicule passe à un état « active balayage » au lieu de l'état « balayage » simple. Dans cette configuration le véhicule à l'état « active balayage », requiert à partir que l'appareil mobile A émette les trames « notification » avec adjonction d'un trame additionnelle représentatif du code évolutif calculé.

Avantageusement, on prévoit d'interpréter l'information de distance entre le véhicule V et l'appareil mobile A pour déterminer si l'utilisateur U est situé du côté gauche ou du côté droit du véhicule ; ainsi, la commande de déverrouillage n'est transmise que si le tiré de poignée est réalisé du côté du véhicule au niveau duquel la présence de l'appareil mobile a été détectée.

Le nombre d'échanges entre les interfaces I1 et I2 est ainsi limité entre le moment où l'utilisateur U touche la poignée P et le moment où elle peut être déverrouillée ce qui permet d'éviter l'effet de mur. En effet, les opérations d'échanges d'informations entre les deux interfaces I1 et I2 réalisées avant même le début de tiré de poignée n'ont pas à être répétées.

Dans un mode de réalisation alternatif non décrit on peut envisager que l'appareil mobile soit un identifiant CID muni d'une interface BLE. Dans ce cas de figure, l'état initial du CID est l'état « veille », et il sera prévu dans l'étape 101 que l'interface BLE du CID passe de l'état « veille » à l'état « balayage ».

## Revendications

1. Procédé de pré authentification d'un utilisateur (U) auprès d'un véhicule (V) en vue d'opérer l'accès de l'utilisateur (U) au véhicule (V) lors de l'actionnement d'une poignée (P) disposée sur un ouvrant (O) dudit véhicule (V), ledit utilisateur (U) étant muni d'un appareil mobile (A), ledit véhicule (V) et ledit appareil mobile (A) comportant chacun une interface (I1, I2) de communication sans fil selon le protocole Bluetooth® Low Energy (BLE), chacune desdites interfaces (I1, I2) pouvant adopter un état au moins parmi les états suivants: « veille » , « notification », « balayage », « initiation », «connecté»; chacune desdites interfaces (I1, I2) étant initialement dans l'état « notification » dans lequel chacune desdites interfaces (I1, I2) émet selon une période d'émission de base un ensemble de données comportant entre autres des données d'identité et des informations de disponibilité d'un service d'accès au véhicule (V) ; ledit procédé comportant :
- une première étape (101) dans laquelle l'une desdites interface (I1, I2) passe de l'état « notification » à l'état « balayage » dans lequel ladite interface (I1, I2) recherche dans son environnement la présence d'une interface, pendant une durée au moins égale à la période d'émission de base de l'autre interface (I1, I2), ladite autre interface émettant un ensemble de données comportant les informations de disponibilité dudit service d'accès au véhicule (V), ledit passage de l'état « notification » à l'état « balayage » se faisant selon une période prédéterminé (Ps) ;
- une deuxième étape (102) dans laquelle, si l'interface (I1, I2) dans l'état « balayage » identifie la présence de l'autre interface (I1, I2) dans l'état « notification », l'interface (I1, I2) dans l'état « balayage » passe dans un état « initiation » dans lequel elle demande à l'interface identifiée l'établissement d'une connexion;
- une troisième étape (103) dans laquelle les interfaces (I1, I2) du véhicule (V) et de l'appareil mobile (A) passent à l'état « connecté » dans lequel elles peuvent échanger des données ;
- une quatrième étape (104) dans laquelle le véhicule (V) envoie au moyen de l'interface (I1) et à destination de l'interface (I2) de l'appareil mobile (A) une demande d'authentification ;
- une cinquième étape (105) dans laquelle l'appareil mobile (A) envoie au moyen de l'interface (I2) et à destination de l'interface (I1) du véhicule (V) une trame de données contenant sa réponse à la demande d'authentification, ladite trame de données comportant également des données d'identité de l'appareil mobile (A) ;
- une sixième étape (106) dans laquelle le véhicule (V) vérifie la cohérence de la réponse d'authentification envoyée par l'appareil mobile (A) ;
- une septième étape (107) dans laquelle, le véhicule (V), stocke les données d'identité de l'appareil mobile (A), si la réponse d'authentification envoyée par l'appareil mobile (A) est cohérente ;
- une huitième étape (108) dans laquelle les interfaces (I1, I2) du véhicule (V) et de l'appareil mobile (A) repassent à l'état « notification »,;
- une neuvième étape (109) dans laquelle lorsque la poignée (P) de l'ouvrant (O) du véhicule (V) est actionnée, l'interface du véhicule (I1) passe de l'état « notification » à l'état « balayage »
- une dixième étape (110) dans laquelle, l'interface (I1) dans l'état « balayage » valide la présence de l'interface (I2) de l'appareil mobile (A) dans l'état « notification » par réception d'une trame de données émise par l'interface (I2) de l'appareil mobile (A) comportant entre autres les données d'identité stockées, et autorise l'accès au véhicule par déverrouillage dudit ouvrant.

2. Procédé, selon la revendication précédente, **caractérisé en ce que** les trames de données émise, par l'interface (I2) de l'appareil mobile (A), dans l'état « connecté » lors de la cinquième étape (105) ou à l'état « notification » lors de la dixième étape (110) comportent également une information sur la position de l'appareil mobile (A).

3. Procédé, selon la revendication précédente, **caractérisé en ce que** dans la sixième étape (106), à partir de l'information sur la position de l'appareil mobile (A), une distance entre le véhicule (V) et l'appareil mobile est obtenue et est comparée à une valeur de distance seuil prédéterminée.

4. Procédé, selon la revendication précédente, **caractérisé en ce que**, si la distance est inférieure ou égale à la distance seuil on passe à la septième étape (107), et **en ce que** si la distance est supérieure à la distance seuil on retourne à la première étape (101).

5. Procédé, selon l'une des revendications 3 ou 4, **caractérisé en ce que** dans la dixième étape (110), à partir de l'information sur la position de l'appareil mobile (A), la distance entre le véhicule (V) et l'appareil mobile est obtenue et est comparée à une de distance de déverrouillage prédéterminée.

6. Procédé, selon la revendication précédente, **caractérisé en ce que**, si la distance entre le véhicule (V) et l'appareil mobile (A) est supérieure à la distance de déverrouillage, le déverrouillage de l'ouvrant est inhibée.

7. Procédé, selon la revendication précédente, **caractérisé en ce que** la distance entre le véhicule (V) et l'appareil mobile (A) est évaluée à partir d'un côté du véhicule (V) pour différencier la présence de l'appareil mobile (A) sur la gauche ou sur la droite du véhicule (V), le déverrouillage dans la dixième étape (110) n'étant autorisé que si l'appareil mobile (A) est localisé du côté de l'actionnement de la poignée (P).

8. Procédé, selon l'une quelconque des revendications précédentes, **caractérisé en ce que** la période d'émission de base de l'interface (I2) de l'appareil mobile (A) est d'environ 100ms.

9. Procédé, selon l'une quelconque des revendications précédentes, **caractérisé en ce que** la période prédéterminé de passage de l'état « notification » à l'état « balayage » de l'une desdites interface (I1, I2) est de l'ordre de quelques secondes, préférentiellement 10 secondes.

10. Procédé selon l'une quelconque des revendications précédentes, **caractérisé en ce que** les données d'identité de l'appareil mobile (A) stockées dans la septième étape (107) sont valides pendant une durée de validité prédéterminée.

11. Procédé, selon la revendication précédente, **caractérisé en ce que**, dans la huitième étape (108), l'interface (I2) de l'appareil mobile (A) passe dans l'état « notification » avec une période d'émission modifiée inférieure à la période d'émission en mode « notification » de base, pendant la durée de validité.

12. Procédé, selon la revendication précédente, **caractérisé en ce que** la période d'émission modifiée est fixé à la moitié de la période d'émission de base.

13. Procédé, selon l'une quelconque des revendications précédentes, **caractérisé en ce qu'**à partir de la huitième étape (108) les trames de données émises, par l'interface (I2) de l'appareil mobile (A), dans l'état « notification », comportent également un code évolutif.

14. Procédé, selon la revendication 13, **caractérisé en ce que** le code évolutif est une fonction du temps absolu ou relatif défini depuis la huitième étape (108).

15. Procédé, selon la revendication 13, **caractérisé en ce que** le code évolutif est fonction d'une incrémentation définie depuis la huitième étape (108).

## Patentansprüche

1. Verfahren zur Vorauthentifizierung eines Benutzers (U) bei einem Fahrzeug (V), um den Zugang des Benutzers (U) zum Fahrzeug (V) bei der Betätigung eines Handgriffs (P) zu bewirken, der auf einer Tür (O) des Fahrzeugs (V) angeordnet ist, wobei der Benutzer (U) mit einem beweglichen Gerät (A) ausgestattet ist, wobei das Fahrzeug (V) und das bewegliche Gerät (A) je eine Schnittstelle (I1, I2) zur drahtlosen Kommunikation gemäß dem Protokoll Bluetooth® Low Energy (BLE) aufweisen, wobei jede der Schnittstellen (I1, I2) mindestens einen Zustand unter den folgenden Zuständen annehmen kann: "Standby", "Benachrichtigung", "Abtasten", "Initialisierung", "Verbunden"; wobei jede der Schnittstellen (I1, I2) anfangs im Zustand "Benachrichtigung" ist, in dem jede der Schnittstellen (I1, I2) gemäß einem Basissendezeitraum eine Gruppe von Daten sendet, die unter anderen Identitätsdaten und Verfügbarkeitsinformationen eines Zugangsdiensts zum Fahrzeug (V) aufweist; wobei das Verfahren aufweist:
- einen ersten Schritt (101), in dem eine der Schnittstellen (I1, I2) vom Zustand "Benachrichtigung" in den Zustand "Abtasten" übergeht, in dem die Schnittstelle (I1, I2) während einer Dauer mindestens gleich dem Basissendezeitraum der anderen Schnittstelle (I1, I2) in ihrer Umgebung das Vorhandensein einer Schnittstelle sucht, wobei die andere Schnittstelle eine Gruppe von Daten sendet, die die Verfügbarkeitsinformationen des Zugangsdiensts zum Fahrzeug (V) aufweist, wobei der Übergang vom Zustand "Benachrichtigung" zum Zustand "Abtasten" gemäß einem vorbestimmten Zeitraum (Ps) erfolgt;
- einen zweiten Schritt (102), in dem, wenn die Schnittstelle (I1, I2) im Zustand "Abtasten" das Vorhandensein der anderen Schnittstelle (I1, I2) im Zustand "Benachrichtigung" erkennt, die Schnittstelle (I1, I2) im Zustand "Abtasten" in einen Zustand "Initialisierung" übergeht, in dem sie von der erkannten Schnittstelle den Aufbau einer Verbindung fordert;
- einen dritten Schritt (103), in dem die Schnittstellen (I1, I2) des Fahrzeugs (V) und des beweglichen Geräts (A) in den Zustand "Verbunden" übergehen, in dem sie Daten austauschen können;
- einen vierten Schritt (104), in dem das Fahrzeug (V) mittels der Schnittstelle (I1) und an die Schnittstelle (I2) des beweglichen Geräts (A) eine Authentifizierungsanforderung schickt;
- einen fünften Schritt (105), in dem das bewegliche Gerät (A) mittels der Schnittstelle (I2) und an die Schnittstelle (I1) des Fahrzeugs (V) einen seine Antwort auf die Authentifizierungsanforderung enthaltenden Datenrahmen schickt, wobei der Datenrahmen ebenfalls Identitätsdaten des beweglichen Geräts (A) aufweist;
- einen sechsten Schritt (106), in dem das Fahrzeug (V) die Kohärenz der vom beweglichen Gerät (A) geschickten Authentifizierungsantwort überprüft;
- einen siebten Schritt (107), in dem das Fahrzeug (V) die Identitätsdaten des beweglichen Geräts (A) speichert, wenn die vom bewegliche Gerät (A) geschickte Authentifizierungsantwort kohärent ist;
- einen achten Schritt (108), in dem die Schnittstellen (I1, I2) des Fahrzeugs (V) und des beweglichen Geräts (A) wieder in den Zustand "Benachrichtigung" gehen;
- einen neunten Schritt (109), in dem, wenn der Handgriff (P) der Tür (O) des Fahrzeugs (V) betätigt wird, die Schnittstelle des Fahrzeugs (I1) vom Zustand "Benachrichtigung" in den Zustand "Abtasten" übergeht;
- einen zehnten Schritt (110), in dem die Schnittstelle (I1) im Zustand "Abtasten" das Vorhandensein der Schnittstelle (I2) des beweglichen Geräts (A) im Zustand "Benachrichtigung" durch Empfang eines von der Schnittstelle (I2) des beweglichen Geräts (A) gesendeten Datenrahmens validiert, der unter anderen die gespeicherten Identitätsdaten aufweist, und den Zugang zum Fahrzeug durch Entriegeln der Tür erlaubt.

2. Verfahren nach dem vorhergehenden Anspruch, **dadurch gekennzeichnet, dass** die von der Schnittstelle (I2) des beweglichen Geräts (A) im Zustand "Verbunden" während des fünften Schritts (105) oder im Zustand "Benachrichtigung" während des zehnten Schritts (110) gesendeten Datenrahmen ebenfalls eine Information über die Position des beweglichen Geräts (A) aufweisen.

3. Verfahren nach dem vorhergehenden Anspruch, **dadurch gekennzeichnet, dass** im sechsten Schritt (106) ausgehend von der Information über die Position des beweglichen Geräts (A) ein Abstand zwischen dem Fahrzeug (V) und dem beweglichen Gerät erhalten und mit einem vorbestimmten Abstandschwellenwert verglichen wird.

4. Verfahren nach dem vorhergehenden Anspruch, **dadurch gekennzeichnet, dass**, wenn der Abstand geringer als der oder gleich dem Schwellenabstand ist, in den siebten Schritt (107) übergegangen wird, und wenn der Abstand größer als der Schwellenabstand ist, in den ersten Schritt (101) zurückgekehrt wird.

5. Verfahren nach einem der Ansprüche 3 oder 4, **dadurch gekennzeichnet, dass** im zehnten Schritt (110) ausgehend von der Information über die Position des beweglichen Geräts (A) der Abstand zwischen dem Fahrzeug (V) und dem beweglichen Gerät erhalten und mit einem vorbestimmten Entriegelungsabstand verglichen wird.

6. Verfahren nach dem vorhergehenden Anspruch, **dadurch gekennzeichnet, dass**, wenn der Abstand zwischen dem Fahrzeug (V) und dem beweglichen Gerät (A) größer ist als der Entriegelungsabstand, die Entriegelung der Tür verhindert wird.

7. Verfahren nach dem vorhergehenden Anspruch, **dadurch gekennzeichnet, dass** der Abstand zwischen dem Fahrzeug (V) und dem beweglichen Gerät (A) ausgehend von einer Seite des Fahrzeugs (V) ermittelt wird, um das Vorhandensein des beweglichen Geräts (A) links oder rechts vom Fahrzeug (V) zu unterscheiden, wobei die Entriegelung im zehnten Schritt (110) nur erlaubt wird, wenn das bewegliche Gerät (A) sich auf der Seite der Betätigung des Handgriffs (P) befindet.

8. Verfahren nach einem der vorhergehenden Ansprüche, **dadurch gekennzeichnet, dass** der Basissendezeitraum der Schnittstelle (I2) des beweglichen Geräts (A) etwa 100ms beträgt.

9. Verfahren nach einem der vorhergehenden Ansprüche, **dadurch gekennzeichnet, dass** der vorbestimmte Zeitraum des Übergangs vom Zustand "Benachrichtigung" in den Zustand "Abtasten" einer der Schnittstellen (I1, I2) in der Größenordnung von einigen Sekunden liegt, vorzugsweise 10 Sekunden.

10. Verfahren nach einem der vorhergehenden Ansprüche, **dadurch gekennzeichnet, dass** die im siebten Schritt (107) gespeicherten Identitätsdaten des beweglichen Geräts (A) während einer vorbestimmten Validitätsdauer validiert werden.

11. Verfahren nach dem vorhergehenden Anspruch, **dadurch gekennzeichnet, dass** im achten Schritt (108) die Schnittstelle (I2) des beweglichen Geräts (A) in den Zustand "Benachrichtigung" mit einem veränderten Sendezeitraum kürzer als der Sendezeitraum im Basismodus "Benachrichtigung" während der Validitätsdauer übergeht.

12. Verfahren nach dem vorhergehenden Anspruch, **dadurch gekennzeichnet, dass** der veränderte Sendezeitraum auf die Hälfte des Basissendezeitraums festgelegt wird.

13. Verfahren nach einem der vorhergehenden Ansprüche, **dadurch gekennzeichnet, dass** ab dem achten Schritt (108) die von der Schnittstelle (I2) des beweglichen Geräts (A) im Zustand "Benachrichtigung" gesendeten Datenrahmen ebenfalls einen entwicklungsfähigen Code aufweisen.

14. Verfahren nach Anspruch 13, **dadurch gekennzeichnet, dass** der entwicklungsfähige Code von der ab dem achten Schritt (108) definierten absoluten oder relativen Zeit abhängt.

15. Verfahren nach Anspruch 13, **dadurch gekennzeichnet, dass** der entwicklungsfähige Code von einer ab dem achten Schritt (108) definierten Inkrementierung abhängt.

## Claims

1. Method for pre-authenticating a user (U) with a vehicle (V) in order for the user (U) to access the vehicle (V) upon the actuation of a handle (P) disposed on an opening (O) of said vehicle (V), said user (U) being equipped with a mobile device (A), said vehicle (V) and said mobile device (A) each comprising a wireless communication interface (I1, I2) based on the Bluetooth® Low Energy (BLE) protocol, each of said interfaces (I1, I2) being able to adopt at least one state out of the following states: "standby", "notification", "scanning", "initiation", "connected"; each of said interfaces (I1, I2) being initially in the "notification" state in which each of said interfaces (I1, I2) transmits, according to a basic transmission period, a set of data comprising, among other things, identity data and information on availability of a vehicle (V) access service; said method comprising:
- a first step (101) in which one of said interfaces (I1, I2) switches from the "notification" state to the "scanning" state in which said interface (I1, I2) searches in its environment for the presence of an interface, for a period at least equal to the basic transmission period of the other interface (I1, I2), said other interface transmitting a set of data comprising information on availability of said vehicle (V) access service, said switch from the "notification" state to the "scanning" state being done according to a predetermined period (Ps) ;
- a second step (102) in which, if the interface (I1, I2) in the "scanning" state identifies the presence of the other interface (I1, I2) in the "notification" state, the interface (I1, I2) in the "scanning" state switches to an "initiation" state in which it asks the identified interface to set up a connection;
- a third step (103) in which the interfaces (I1, I2) of the vehicle (V) and of the mobile device (A) switch to the "connected" state in which they can exchange data;
- a fourth step (104) in which the vehicle (V) sends, by means of the interface (I1) and to the interface (I2) of the mobile device (A), an authentication request;
- a fifth step (105) in which the mobile device (A) sends, by means of the interface (I2) and to the interface (I1) of the vehicle (V), a data frame containing its response to the authentication request, said data frame also comprising identity data of the mobile device (A) ;
- a sixth step (106) in which the vehicle (V) checks the consistency of the authentication response sent by the mobile device (A);
- a seventh step (107) in which the vehicle (V) stores the identity data from the mobile device (A) if the authentication response sent by the mobile device (A) is consistent;
- an eighth step (108) in which the interfaces (I1, I2) of the vehicle (V) and of the mobile device (A) switch back to the "notification" state;
- a ninth step (109) in which, when the handle (P) of the opening (O) of the vehicle (V) is actuated, the interface of the vehicle (I1) switches from the "notification" state to the "scanning" state;
- a tenth step (110) in which the interface (I1) in the "scanning" state validates the presence of the interface (I2) of the mobile device (A) in the "notification" state by reception of a data frame transmitted by the interface (I2) of the mobile device (A) comprising, among other things, the stored identity data, and authorizes the access to the vehicle by unlocking said opening.

2. Method, according to the preceding claim, **characterized in that** the data frames transmitted by the interface (I2) of the mobile device (A) in the "connected" state in the fifth step (105) or in the "notification" state in the tenth step (110) also comprise information on the position of the mobile device (A).

3. Method according to the preceding claim, **characterized in that**, in the sixth step (106), from the information on the position of the mobile device (A), a distance between the vehicle (V) and the mobile device is obtained and is compared to a predetermined threshold distance value.

4. Method according to the preceding claim, **characterized in that**, if the distance is less than or equal to the threshold distance, the method switches to the seventh step (107), and **in that** if the distance is greater than the threshold distance, the method returns to the first step (101) .

5. Method according to either of Claims 3 and 4, **characterized in that**, in the tenth step (110), from the information on the position of the mobile device (A), the distance between the vehicle (V) and the mobile device is obtained and is compared to a predetermined unlocking distance.

6. Method according to the preceding claim, **characterized in that**, if the distance between the vehicle (V) and the mobile device (A) is greater than the unlocking distance, the unlocking of the opening is disabled.

7. Method according to the preceding claim, **characterized in that** the distance between the vehicle (V) and the mobile device (A) is assessed from a side of the vehicle (V) to differentiate the presence of the mobile device (A) on the left or to the right of the vehicle (V), the unlocking in the tenth step (110) being authorized only if the mobile device (A) is located on the side of the actuation of the handle (P).

8. Method according to any one of the preceding claims, **characterized in that** the basic transmission period of the interface (I2) of the mobile device (A) is approximately 100 ms.

9. Method according to any one of the preceding claims, **characterized in that** the predetermined period for switching from the "notification" state to the "scanning" state of one of said interfaces (I1, I2) is of the order of a few seconds, preferentially 10 seconds.

10. Method according to any one of the preceding claims, **characterized in that** the identity data of the mobile device (A) stored in the seventh step (107) are valid for a predetermined validity time.

11. Method according to the preceding claim, **characterized in that**, in the eighth step (108), the interface (12) of the mobile device (A) switches to the "notification" state with a modified transmission period less than the transmission period in basic "notification" mode, during the validity time.

12. Method according to the preceding claim, **characterized in that** the modified transmission period is set to half the basic transmission period.

13. Method according to any one of the preceding claims, **characterized in that**, from the eighth step (108), the data frames transmitted by the interface (I2) of the mobile device (A) in the "notification" state also comprise a changeable code.

14. Method according to Claim 13, **characterized in that** the changeable code is a function of the absolute or relative time defined from the eighth step (108).

15. Method according to Claim 13, **characterized in that** the changeable code is a function of an incrementation defined from the eighth step (108).
